# EUROPEAN PATENT APPLICATION

(11) **EP 4 826 786 A1**
(43) Date of publication of application: **21.10.2026**
(21) Application number: 24904174.0
(22) Date of filing: 05.12.2024
(51) Int. Cl.: H01M 4/38, H01M 4/62, C01B 33/02, H01M 4/02

(54) **PRECURSOR FOR NEGATIVE ELECTRODE MATERIAL OF LITHIUM SECONDARY BATTERY AND METHOD FOR MANUFACTURING SAME**

(30) Priority: 15.12.2023 KR 20230183920
(71) Applicant: POSCO Holdings Inc., Pohang-si, Gyeongsangbuk-do 37859 (KR)
(72) Inventor: WOO, Jung-Gyu, Pohang-si, Gyeongsangbuk-do 37877 (KR); YOU, Seung-Jae, Pohang-si, Gyeongsangbuk-do 37877 (KR); KIM, Dae-Hyun, Pohang-si, Gyeongsangbuk-do 37877 (KR); JO, Hyun-Chul, Pohang-si, Gyeongsangbuk-do 37877 (KR)
(74) Representative: Pfenning, Meinig & Partner mbB
(86) International application number: PCT/KR2024/019827
(87) International publication number: WO 2025/127609

(57) **Abstract**

One aspect of the present invention provides: a precursor for a negative electrode material of a lithium secondary battery; and a method for manufacturing same, wherein by controlling the molding density of a negative electrode material precursor of a lithium secondary battery, high capacity characteristics and excellent lifespan characteristics of a negative electrode material can be ensured.

## Description

### Technical Field

The present disclosure relates to a precursor for a negative electrode material of a lithium secondary battery and a negative electrode material manufactured therefrom.

### Background Art

A lithium secondary battery generally includes a positive electrode including a positive electrode material, a negative electrode including a negative electrode material, a separator, and an electrolyte, and is a secondary battery in which charging and discharging are performed by intercalation-deintercalation of lithium ions. Since a lithium secondary battery has high energy density and a high electromotive force and may exhibit high capacity, it is being applied to various field such as mobile devices, electric vehicles, and hybrid electric vehicles.

As a positive electrode material forming the positive electrode of the lithium secondary battery, a metal oxide such as LiCoO₂, LiMnO₂, LiMn₂O₄, or LiCrO₂ is used, and as a negative electrode material forming the negative electrode, a carbon-based material such as metal lithium, graphite, or activated carbon and a metal-based material such as a silicon oxide (SiOₓ) is used.

As the carbon-based negative electrode material, various types of materials, for example, natural graphite and artificial graphite which are a crystalline carbon-based material, or hard carbon and soft carbon which are an amorphous carbon-based material are being used. Thereamong, a graphite-based negative electrode material which has excellent reversibility and is favorable for lifespan characteristics of a lithium secondary battery is the most widely used.

However, since the graphite-based negative electrode material has a relatively low theoretical capacity value (for example, about 372 mAh/g in the case of a LiC₆ negative electrode), it is somewhat insufficient to satisfy the electrochemical properties required in the related market.

Therefore, many researchers are interested in Group IV elements (Si, Ge, Sn) in the periodic table, and thereamong, in particular, silicon is receiving attention as a very attractive material due to its very high theoretical capacity (Li₁₅Si₄: 3600 mAh/g) and low operating voltage (~0.1V vs. Li/Li+) characteristics. However, during silicon charging and discharging, large volume expansion and shrinkage occur due to a reaction with lithium, and thus, pulverization of silicon active material powder and poor electrical contact between silicon active material powder and a current collector may occur. Due to the phenomenon, a lithium secondary battery including silicon may have a rapidly reduced capacity as the charge-discharge cycle proceeds.

### Summary of Invention

### Technical Problem

An aspect of the present disclosure is to provide a precursor for a negative electrode material of a lithium secondary battery which may secure high capacity characteristics and excellent lifespan characteristics, and a method for manufacturing the same.

An object of the present disclosure is not limited to the above description. Any person with ordinary skill in the art to which the present disclosure pertains will have no difficulty in understanding further objects of the present disclosure from the general description the present specification.

### Solution to Problem

According to an aspect of the present disclosure, a precursor for a negative electrode material of a lithium secondary battery includes: silicon nanoparticles; a conductive material; and a carbon-based material, wherein the precursor has a molding density of more than 1.3 g/cc and 1.6 g/cc or less.

The conductive material described above may be any one or more of natural graphite and artificial graphite.

The carbon-based material described above may be at least one of coal-based pitch, petroleum-based pitch, coal tar, PAA, and PVA.

The coal-based pitch described above and the petroleum-based pitch described above may have a fixed carbon content of 60% or more and a β-resin value of 10% or more.

The carbon-based material described above may further include a caking additive.

The caking additive described above may be an olefin-based oligomer or polymer having viscoelasticity, or organic material having a binder function.

According to another aspect of the present disclosure, a method for manufacturing a precursor for a negative electrode material of a lithium secondary battery includes: preparing silicon nanoparticles, a conductive material, and a carbon-based material; mixing the silicon nanoparticles, the conductive material, and the carbon-based material to prepare a mixture; pressure molding the mixture, wherein the pressure molding is performed by applying a pressure of 6 ton/cm² or more and 20 ton/cm² or less.

The conductive material described above may be any one or more of natural graphite and artificial graphite.

The carbon-based material described above may be at least one of coal-based pitch, petroleum-based pitch, coal tar, PAA, and PVA.

The coal-based pitch described above and the petroleum-based pitch described above may have a fixed carbon content of 60% or more and a β-resin value of 10% or more.

In the preparing a mixture described above, a caking additive may be further mixed.

The caking additive described above may be an olefin-based oligomer or polymer having viscoelasticity, or organic material having a binder function.

When the carbon-based material is the coal-based pitch or the petroleum-based pitch, the pressure molding may be performed at a temperature higher than a softening point of the pitch by 10°C to 150°C.

The pressure molding may be performed at room temperature.

The manufactured precursor for a negative electrode material of a lithium secondary battery may have a molding density of more than 1.3 g/cc and 1.6 g/cc or less.

### Advantageous Effects of Invention

The precursor for a negative electrode material of a lithium secondary battery of the present disclosure may provide a negative electrode material on which a physically and chemically robust high-density carbon layer is formed by controlling a molding density. As a result, the negative electrode material obtained from the precursor for a negative electrode material of the present disclosure may secure high-capacity characteristics and excellent lifespan characteristics.

### Brief Description of Drawings

FIG. 1 is an image photograph of a molded body obtained by carbonizing the precursor for a negative electrode material of a lithium secondary battery of Inventive Example 1.
FIG. 2 is an SEM image of a cross section of a negative electrode in which the negative electrode material of Comparative Example 1 on a current collector is coated.
FIG. 3 is an SEM image of a cross section of a negative electrode in which the negative electrode material of Inventive Example 1 on a current collector is coated.
FIG. 4 is an SEM image of a cross section of a negative electrode in which the negative electrode material of Comparative Example 2 on a current collector is coated.
FIG. 5 is an SEM image of a cross section of a negative electrode in which the negative electrode material of Comparative Example 3 on a current collector is coated.
FIG. 6 is a graph showing a swelling ratio by the number of cycles of Inventive Examples 1 and 2 and Comparative Examples 1 to 3.

### Best Mode for Invention

Hereinafter, the preferred example embodiments in the present disclosure will now be described in detail. However, the example embodiments in the present disclosure may be modified in many different forms, and the scope of the present disclosure is not limited to the example embodiments set forth herein.

In the present specification, the term "comprising" is used to indicate further inclusion of other constituent elements rather than exclusion of other constituent elements, unless otherwise particularly stated.

In addition, unless otherwise defined in the specification of the present disclosure, % unit refers to wt%.

Though not essential, it should be noted that the technical solution according to each aspect of the present disclosure may be useful in the technical solution of other aspects. In addition, the composition and the various useful parameters according to each aspect of the present disclosure may be appropriately combined with other aspects to obtain favorable effects.

A negative electrode material including silicon nanoparticles may produce an irreversible product such as a SEI Layer, carbon monoxide (CO), or carbon dioxide (CO₂) by a reaction with lithium during charging and discharging, and also may cause large volume expansion and shrinkage of silicon nanoparticles.

In this case, some of the silicon nanoparticles may be exposed to the surface and react with an electrolyte solution, thereby producing new SEI to continuously consume lithium. As a result, an existing negative electrode material including silicon nanoparticles has a problem of poor lifespan characteristics.

In order to solve the problems described above, the inventors of the present disclosure found that when a physically and chemically robust high-density carbon layer is formed inside a negative electrode material, a contact path between silicon nanoparticles and a conductive material may be reinforced, and also swelling of silicon nanoparticles may be controlled.

In addition, the inventors of the present disclosure found that the high-density carbon layer may complement low conductivity (10⁻⁴ S/cm) of a silicon raw material to induce a reversible reaction with lithium, and as a result, the capacity of the negative electrode material is increased and simultaneously the lifespan characteristics may be complemented.

From this point of view, the inventors learned that in order to provide the high-density carbon layer described above, the molding density of the precursor for a negative electrode material of a lithium secondary battery needs to be controlled to a specific level, thereby deriving the present disclosure.

From this point of view, the precursor for a negative electrode material of a lithium secondary battery according to an example of the present disclosure may include: silicon nanoparticles; a conductive material; and a carbon-based material, wherein the precursor has a molding density of more than 1.3 g/cc and 1.6 g/cc or less. Hereinafter, each component will be described in detail.

### Silicon nanoparticles

An example of the present disclosure may include silicon nanoparticles for the purpose of providing a negative electrode material having high capacity characteristics.

As a non-limiting example, the silicon nanoparticles may have a D50 particle size of 50 nm or more and 250 nm or less. This is for securing high capacity while preventing swelling caused by repeated charge and discharge of the silicon nanoparticles. Herein, D50 refers to a particle diameter corresponding to 50% of a volume accumulation of a particle size distribution. As another example, the silicon nanoparticles may have a D50 particle size of 50 nm or more and 150 nm or less, and as another example, may be 100 nm or more and 150 nm or less.

In addition, a weight ratio of the silicon nanoparticles included in the precursor for a negative electrode material for a lithium secondary battery according to an example embodiment in the present disclosure may be 40 wt% or more and 70 wt% or less based on the total weight of the negative electrode material precursor.

The negative electrode material for a lithium secondary battery according to an example embodiment in the present disclosure may secure the high capacity characteristics of the negative electrode material, by including 40 wt% or more of the silicon nanoparticles. However, when the silicon nanoparticles are excessively included in the negative electrode material precursor, the silicon nanoparticles and the conductive material may not be completely surrounded by a carbon coating layer each other or as a whole, and in this case, a result of collapse of the structure of the negative electrode material which is a silicon-carbon composite may occur. For this reason, an example embodiment in the present disclosure may include 70 wt% or less of the silicon nanoparticles with respect to the total weight of the negative electrode material precursor for a lithium secondary battery.

### Conductive material

An example embodiment in the present disclosure may further include a conductive material so that the conductive path with the silicon nanoparticles described above may be secured, and reversibility of lithium ions may be improved to increase the capacity and efficiency of the negative electrode material.

For the purpose described above, an example of the present disclosure may include 10 wt% or more of the conductive material with respect to the total weight of the negative electrode material precursor for a lithium secondary battery. More specifically, the conductive material may be included at 20 wt% or more with respect to the total weight of the negative electrode material precursor. However, when the amount becomes excessive, capturing by the carbon coating layer may be difficult, and thus, in an example embodiment in the present disclosure, a weight ratio of the conductive material may be 30 wt% or less with respect to the total weight of the negative electrode material precursor.

More specifically, an example of the conductive material may be any one or more of natural graphite and artificial graphite.

### Carbon-based material

As described above, an example embodiment in the present disclosure may secure the high capacity characteristics and excellent lifespan characteristics of the negative electrode material by forming a physically and chemically robust high-density carbon layer.

As such, the precursor for a negative electrode material of a lithium secondary battery according to an example embodiment in the present disclosure may include a carbon-based material for the purpose of forming the carbon layer.

According to an example embodiment in the present disclosure, the carbon-based material may be at least one of coal-based pitch, petroleum-based pitch, coal tar, PAA, and PVA. The carbon-based materials may also function as a caking agent which is carbonized with amorphous carbon to stably support the structure of the negative electrode material. That is, the carbon-based materials are dispersed between the pores of a porous silicon-carbon composite and placed, thereby, when the negative electrode material precursor according to the present example embodiment is applied to a battery, preventing collapse of the porous structure of the silicon-carbon composite even when the charge-discharge cycles are repeated.

Meanwhile, as an example, the coal-based pitch and the petroleum-based pitch may have a fixed carbon content of 60% or more. More specifically, the fixed carbon content may be 70% or more.

As the fixed carbon value of the coal-based pitch and the petroleum-based pitch increases, a conductive path with silicon particles having low self-conductivity is produced to induce an increase in capacity and efficiency. In addition, when the fixed carbon value satisfies the range, internal pores of the negative electrode material of the present example embodiment may be decreased. Accordingly, a side reaction with an electrolyte solution may also be decreased, thereby contributing to an increase in initial efficiency of a battery.

The coal-based pitch and the petroleum-based pitch may have a β-resin value of, for example, 10% or more, and more specifically, 25% or more.

Specifically, the β-resin value may refer to a value obtained by excluding a quinoline capacity (benzeneinsoluble) from a benzene-insoluble content. The β-resin value is proportional to the caking property. According to an example embodiment in the present disclosure, when the β-resin value uses the coal-based pitch or the petroleum-based pitch satisfying the range, the porous structure of the silicon-carbon composite may be maintained more stably. Accordingly, an example embodiment in the present disclosure may implement a lithium secondary battery having excellent lifespan characteristics and electrode plate swelling characteristics.

Meanwhile, the carbon-based material according to an example of the present disclosure may further include a caking additive. The caking additive serves to help maintain the shape of the molded body. Within the range of achieving the purpose described above, the caking additive is not limited separately, but as an example, the caking additive may be an olefin-based oligomer or polymer having viscoelasticity, and the like, and organic material having a binder function such as PVDF, SBR, CMC, and PAA.

Hereinafter, the precursor for a negative electrode material of a lithium secondary battery according to an example embodiment in the present disclosure will be described in detail.

As described above, an example of the present disclosure may increase the capacity of the negative electrode material and also secure lifespan characteristics, by forming a physically and chemically robust high-density carbon layer inside the negative electrode material.

The negative electrode material precursor according to an example embodiment in the present disclosure may have a molding density of more than 1.3 g/cc and 1.6 g/cc or less, for the purpose of providing the high-density carbon layer.

More specifically, the precursor for a negative electrode material of a lithium secondary battery according to an example of the present disclosure may provide a high-density internal carbon layer, by having the molding density of more than 1.3 g/cc. Thus, an example of the present disclosure may remove pores from the negative electrode material and also increase the surface coverage of the silicon nanoparticles since the silicon nanoparticles are sufficiently surrounded by the internal carbon layer. In addition, an example embodiment in the present disclosure may increase the number of silicon nanoparticles per unit volume by narrowing a distance between the silicon nanoparticles through the molding density described above, and as a result, may increase an electrochemical capacity. According to another example, the lower limit of the molding density may be 1.4 g/cc. However, when the molding density is excessively increased, the strength of the negative electrode material is increased, occurrence of fine powder during pulverization may be later increased, and thus, the upper limit of the molding density may be 1.6 g/cc in an example of the present disclosure. According to another example, the upper limit may be 1.55 g/cc, and according to another example, it may be 1.5 g/cc.

Meanwhile, when the precursor for a negative electrode material described above is carbonized at a certain temperature or higher and then pulverized and classified, the negative electrode material of the present disclosure may be obtained, and the negative electrode material of the present disclosure as such will be described in detail below.

As described above, the precursor for a negative electrode material according to an example of the present disclosure may control the molding density to a certain range, and as a result, the negative electrode material obtained from the precursor for a negative electrode material may have an appropriate level of tap density and specific surface area to show excellent electrochemical performance.

More specifically, the tap density of the negative electrode material according to an example embodiment in the present disclosure may be 0.50 g/cc or more and 0.72 g/cc or less, and the specific surface area thereof may be 2 m²/g or more and 7.3 m²/g or less.

Meanwhile, the negative electrode material of a lithium secondary battery according to an example embodiment in the present disclosure may have a D50 particle size of 8.0 µm or more and 15.0 µm or less.

Specifically, in order to prevent varying battery performance in sections by securing the thickness quality of a uniform electrode plate, the negative electrode material of a lithium secondary battery as an example embodiment in the present disclosure may have a central particle size (D50) of 8.0 µm or more and 15.0 µm or less. More specifically, the central particle size of the negative electrode material may be 9.0 µm or more and 12.0 µm or less or 10.0 µm or more and 11.0 µm or less.

Hereinafter, the method for manufacturing a precursor for a negative electrode material of a lithium secondary battery of the present disclosure will be described. However, the following method for manufacturing a precursor for a negative electrode material of a lithium secondary battery may be only an example, and it should be noted that the precursor for a negative electrode material of a lithium secondary battery of the present disclosure is not necessarily manufactured by the present manufacturing method, and there is no problem in using any manufacturing method for implementing each example embodiment in the present disclosure as long as it is a method meeting the claims of the present disclosure.

The method for manufacturing a precursor for a negative electrode material of a lithium secondary battery according to an example of the present disclosure may include: preparing silicon nanoparticles, a conductive material, and a carbon-based material; mixing the silicon nanoparticles, the conductive material, and the carbon-based material to prepare a mixture; pressure molding the mixture, wherein the pressure molding is performed by applying a pressure of 6 ton/cm² or more and 20 ton/cm² or less. Hereinafter, each step will be described in detail.

First, in an example embodiment in the present disclosure, silicon nanoparticles, a conductive material, and a carbon-based material may be prepared.

In order to obtain the silicon nanoparticles, a silicon raw material may be pulverized through mechanical milling in a non-limiting example embodiment in the present disclosure. Thus, the D50 particle size of the pulverized silicon nanoparticles may be 50 nm or more and 250 nm or less, as described above.

In addition, as an example, the mechanical milling may be performed using stabilized zirconia. In addition, in order to suppress occurrence of fine particles and prevent oxidation of the silicon particles by improving nano-sizing efficiency, the size of the zirconia beads may be less than twice D99 of the silicon raw material, but since the used zirconia beads may be used in various sizes in process design, the present disclosure is not limited thereto.

Since other detailed conditions during mechanical milling may be sufficiently designed by a person skilled in the art according to the purpose, they are not separately limited. However, as an example, a ball per ratio (BPR) of the stabilized zirconia ball to the silicon raw material may be 5:1, and the rotation speed of a rotor inside the pulverizer may be maintained at 2500 rpm.

Further, according to an example of the present disclosure, the solvent in the mechanical milling may be an organic solvent such as ethanol and IPA in order to prevent oxidation of the silicon raw material.

The conductive material may be at least any one or more of natural graphite and artificial graphite, and the carbon-based material may be at least one of coal-based pitch, petroleum-based pitch, coal tar, PAA, and PVA. In addition, the coal-based pitch and the petroleum-based pitch may have a fixed carbon content of 60% or more and a β-resin value of 10% or more. Regarding this, since the precursor for a negative electrode material is as described above, the description of the precursor will be omitted.

As such, after the silicon nanoparticles, the conductive material, and the carbon-based material are prepared, the materials may be mixed to obtain a mixture. Further, according to an example embodiment in the present disclosure, the caking additive may be further mixed during the mixing described above, and as a non-limiting example, the caking additive may be an olefin-based oligomer or polymer having viscoelasticity and the like, or organic material having a binder function such as PVDF, SBR, CMC, and PAA.

The mixing may be performed simultaneously, and at least two or more of the materials described above may be mixed first, and then the remaining may be mixed. As an example, the silicon nanoparticles and the conductive material may be first mixed and spray dried to obtain a spray dried product, the carbon-based material is added, and then the spray dried product and the carbon-based material may be mixed. Further, when the carbon-based material is added, the caking additive may be optionally added. However, this is also only an example, and the present disclosure is not necessarily limited thereto.

In addition, the mixing may be performed by a contact-mediated milling process among powders, and as a non-limiting example, it may be performed by mechanofusion or ball milling. As such, the milling process is performed through a contact-mediated milling process among powders, an independent flow of silicon nanoparticles during mixing with a solvent may be decreased.

The method for manufacturing a precursor for a negative electrode material according to an example embodiment in the present disclosure may include pressure molding the mixture.

That is, according to an example embodiment in the present disclosure, in order to obtain the precursor for a negative electrode material having the molding density described above, a specific pressure may be applied to the mixture within a defined time range. More specifically, when pressure molding is performed as such, the carbon-based material in the negative electrode material precursor described above may be filled into the fine pores, thereby decreasing the specific surface area of the negative electrode material to improve the electrochemical performance of the negative electrode material. As a non-limiting example, the pressure molding may be performed by filling the self-manufactured mold with the precursor powder and using pressurizing press equipment, and the semifinished product obtained therefrom may be defined as a block form.

In particular, according to a non-limiting example embodiment in the present disclosure, the pressure molding may be performed by applying a pressure of 6 ton/cm² or more and 20 ton/cm² or less.

The pressure molding may control the molding density of the precursor of the negative electrode material to an appropriate level, by applying a pressure of 6 ton/cm² or more and 20 ton/cm² or less. More specifically, in an example embodiment in the present disclosure, the molding density of the precursor for the negative electrode material may be maintained at more than 1.3 g/cc and 1.6 g/cc or less, by setting the pressure during pressure molding to the range described above. As another example, the pressure molding step may be performed by applying a pressure of 6 ton/cm² or more and 15 ton/cm² or less, and as another example, may be performed by applying a pressure of 10 ton/cm² or more and 11 ton/cm² or less.

Meanwhile, when the carbon-based material is the coal-based pitch or the petroleum-based pitch according to an example of the present disclosure, the pressure molding may be performed at a temperature higher than a softening point of the pitch by 10°C to 150°C.

In an example of the present disclosure, the pressure molding is performed in a temperature range of higher than the softening point of the pitch by 10°C or more to increase the viscosity of the pitch, thereby removing pores inside the negative electrode material precursor and also maintaining the high surface coverage of the silicon nanoparticles. However, when the temperature in the pressure molding step is higher than the softening point of the pitch by 150°C or more, the structure or shape of the molded body may be changed by gas production or deformation of some components. As another example, the temperature range in the pressure molding step may be higher than the softening point of the pitch by 10°C to 100°C or 50°C to 100°C.

However, according to another example embodiment in the present disclosure, the pressure molding step may also be performed at room temperature.

In general, as described above, in order to perform the pressure molding step well, a heat treatment should be involved, but according to a non-limiting example of the present disclosure, when a high caking pitch having a β-resin value at a certain level or higher is used or a caking additive is further added, the precursor for a negative electrode material having the molding density suggested in the present disclosure may be obtained even when the pressure molding is performed without a separate heat treatment. In this case, since the heat treatment process is not separately needed, time and costs may be reduced in terms of reducing energy added thereto.

The negative electrode material precursor obtained through the steps described above may be subjected to carbonization, pulverization, and classification to obtain a negative electrode material, and a method for manufacturing a negative electrode material from the precursor for a negative electrode material will be described in detail below.

In a non-limiting example of the present disclosure, the precursor obtained by the manufacturing method described above may be carbonized to obtain a molded body.

More specifically, the carbonization may be performed in a temperature range of 800°C or higher and 1000°C or lower. In an example embodiment in the present disclosure, the precursor may be carbonized at 800°C or higher to evaporate the volatile components present inside the existing precursor and harden the pitch to secure the internal structure of the negative electrode material. In addition, when the temperature excessively rises during the carbonization, capacity and efficiency may be reduced due to occurrence of silicon carbide and silicon nitride having no electrical performance, and thus, the carbonization may be performed in a temperature range of 1000°C or lower. In particular, the carbonization may be performed in an inert atmosphere for suppressing oxidation of silicon particles.

The molded body obtained as such may be pulverized and classified, thereby obtaining a negative electrode material having a desired size. As a non-limiting example, the pulverization may be performed by dry pulverization, and the dry pulverization may be performed using a JET mill or pin mill.

According to a non-limiting example embodiment in the present disclosure, carbon coating the surface of the obtained negative electrode material may be further included.

The carbon coating step may be performed by adding a carbon-based material and heat treating, and the carbon-based material may be at least one of petroleum-based pitch, coal tar, PAA, and PVA having a softening point of lower than 250°C. In addition, though it is not limited thereto, the coating may be performed using a twisted blade mixer. Herein, process variables include time, rotational speed, and the like, but considering that these are matters which may be designed by a person skilled in the art appropriately for the purpose, they are not described in the present disclosure.

Hereinafter, the method for manufacturing a negative electrode of a lithium secondary battery of the present disclosure will be described in detail.

The negative electrode may be manufactured by mixing the negative electrode material manufactured according to an implementation example of the present disclosure, a binder, and optionally a conducting material to prepare a composition for forming a negative electrode material layer, and then applying the composition on a negative electrode current collector.

The negative electrode current collector may be, for example, a polymer substrate coated with a copper foil, a nickel foil, a stainless foil, a stainless steel, a titanium foil, a nickel foam, a copper foam, and a conductive metal, and a combination thereof.

The binder may be polyacrylic acid, polyvinyl alcohol, carboxymethylcellulose/styrene-butadiene rubber, hydroxypropylene cellulose, diacetylene cellulose, polyvinyl chloride, polyvinylpyrrolidone, polytetrafluoroethylene, polyvinylidene fluoride, polyethylene, polypropylene, or the like, but is not limited thereto. The binder may be mixed at 1 wt% to 30 wt% with respect to the total amount of the composition for forming a negative electrode material layer.

The conducting material is not particularly limited as long as it has conductivity without causing a chemical change in the battery, and specifically, graphite such as natural graphite or artificial graphite; carbon black such as acetylene black, ketjen black, channel black, furnace black, lamp black, and thermal black; conductive fibers such as a carbon fiber or a metal fiber; metal powder such as fluorocarbon, aluminum, and nickel powder; conductive whiskers such as zinc oxide and potassium titanate; conductive metal oxides such as titanium oxide; conductive materials such as polyphenylene derivatives, and the like may be used. The conducting material may be mixed at 0.1 wt% to 30 wt% with respect to the total amount of the composition for forming a negative electrode material. Mode for Invention

### (1) Manufacture of negative electrode material precursor

First, a silicon raw material (Poly-Si) was prepared. Next, the silicon raw material was pulverized using stabilized zirconia having a size of 0.1 mm, thereby obtaining the slurry of silicon nanoparticles having a D50 particle size of 150 nm. In addition, the pulverization was performed in an ethanol solvent having a purity of 99%, and a solid content ratio corresponded to 10%. Further, the BPR of the stabilized zirconia during the pulverization was 5:1, and the rotational speed of the rotor inside the pulverizer was maintained at 2500 rpm. Next, flake graphite having a central particle diameter (D50) of 8.00 µm was added at 20 wt% to the slurry of silicon nanoparticles obtained by the process described above, and the mixture was spray dried to obtain a powder state. Thereafter, petroleum-based pitch was added at 40 wt% with respect to the total weight of the precursor, and mixing was performed using a mechanofusion to manufacture a negative electrode material precursor. The petroleum-based pitch had a fixed carbon content of 70% or more, and a β-resin value was 25%. Thereafter, the precursor was pressure molded to obtain a negative electrode material precursor in a block form. The pressure molding was performed at the temperature and pressure in the following Table 1. At this time, the pressure was applied to a cylindrical mold having a radius of 1 cm and a height of 5 cm using pressurizing press equipment. Thereafter, the molding density of the manufactured negative electrode material precursor was measured and is shown in the following Table 1. At this time, the molding density was measured by dividing the weight (g) of the molded body by the volume (cc) of the molded body.

### (2) Manufacture of negative electrode material

Next, the negative electrode material was carbonized at a temperature of 900°C in an inert atmosphere. Thereafter, a pulverization process with a JET mill was performed, and then additional coating was performed by evenly dispersing petroleum-based pitch having a softening point of lower than 250°C on the surface of the pulverized particles. At this time, the additional coating was performed using a twisted blade mixer. Thereafter, a heat treatment was performed at a temperature of 900°C in an inert atmosphere, and a negative electrode material was obtained through sieving. The D01, D50, and D90 particle sizes of the obtained negative electrode material were measured using a particle size meter in a manner of laser diffraction, and the measured values are shown in the following Table 1. The D01, D50, and D90 particle sizes refer to particle diameters corresponding to 1%, 50%, and 90% of volume cumulation of particle size distribution, respectively.

In addition, the tap density and BET specific surface area of the obtained negative electrode material were measured and are shown in the following Table 1.

### (3) Manufacture of negative electrode

75 wt% of the manufactured negative electrode material, 24 wt% of a binder including polyacrylic acid (PAA), and 1 wt% of a Super P conducting material were mixed in a distilled water solvent to prepare a negative electrode active material slurry.

The negative electrode active material slurry was applied on a copper (Cu) current collector, dried, and compressed on a roll press at a rolling density of 1.0 g/cc. Thereafter, drying in a vacuum was performed in a vacuum oven to manufacture a negative electrode.

### (4) Electrochemical evaluation

In order to evaluate electrochemical properties, a lithium secondary battery was manufactured. Specifically, a 2032 coin cell type half battery (half coin cell) was manufactured according to a common manufacturing method, using the negative electrode manufactured by the method, a counter electrode of lithium (Li)-metal, and an electrolyte solution in which an 1 mol LiPF₆ solution was dissolved in a mixed solvent of a volume ratio of ethylene carbonate (EC) : ethyl methyl carbonate (EMC) of 3:7. 10 wt% of a FEC additive was added to the electrolyte solution.

The discharge capacity and initial efficiency of the battery, and 50-cycle life were measured, and are shown in the following Table 2.

Current during charging and discharging was measured to be 0.1 C in the initial cycle. In addition, current of 0.5 C was applied during charging and discharging based on the first capacity at 1 C to measure the 50-cycle life. The charge cut-off current at this time was 0.005 C.

**[Table 1]**

| Classificat ion | Pressure molding step | | Molded body density (g/cc) | Negative electrode material particle size | | |
|---|---|---|---|---|---|---|
| | Temperature (°C) | Pressure (ton/cm²) | | D01 | D50 | D90 |
| Comparative Example 1 | 270 | **4** | **1.01** | 2.12 | 10.02 | 19.24 |
| Inventive Example 1 | 270 | 6 | 1.41 | 1.72 | 9.89 | 19.25 |
| Comparative Example 2 | 270 | **21** | **1.63** | **1.05** | 9.82 | 19.02 |
| Comparative Example 3 | 270 | **21** | **1.75** | **0.89** | 9.75 | 19.35 |
| Inventive Example 2 | Room temperature | 20 | 1.52 | 1.65 | 9.74 | 19.68 |

**[Table 2]**

| Classificat ion | Tap density (g/cc) | Specific surface area (m²/g) | Discharge capacity (mAh/g) | Initial efficiency (%) | Lifespan (%, @50cycle) |
|---|---|---|---|---|---|
| Comparative Example 1 | **0.32** | **12.56** | 1357 | **82.5** | **30.2** |
| Inventive Example 1 | 0.55 | 6.51 | 1335 | 85.1 | 58.2 |
| Comparative Example 2 | 0.54 | **9.45** | 1330 | 84.5 | 48.5 |
| Comparative Example 3 | 0.5 | **7.98** | 1287 | **81.8** | **32** |
| Inventive Example 2 | 0.52 | 7.25 | 1338 | 84.8 | 49.8 |

In Comparative Example 1, since the pressure in the pressure molding step was less than 6 ton/cm², the density of the molding density was only 1.01 g/cc. As a result, since pores in the negative electrode material were not removed, the coverage of the silicon nanoparticles was low, and thus, the initial efficiency and lifespan characteristics of the battery were poor.

In Comparative Examples 2 and 3, since the pressure in the pressure molding step was more than 20 ton/cm², the density of the molding density was excessively high. Accordingly, the strength of the molded body was increased, and occurrence of fine powder (D10) of the negative electrode material during pulverization was increased. Thus, in Comparative Examples 2 and 3, it was confirmed that the specific surface area value was measured to be high.

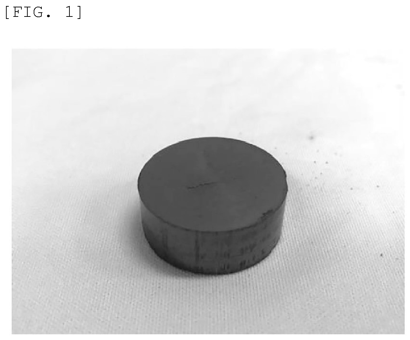

However, in Inventive Example 1, since the conditions suggested in the present disclosure were all satisfied, the discharge capacity, the initial efficiency, and 50-cycle characteristics were all excellent. At this time, an image photograph of the molded body obtained by carbonizing the precursor for a negative electrode material of a lithium secondary battery of Inventive Example 1 is shown in the following FIG. 1.

In particular, in Inventive Example 2, it was found that in the present disclosure, the precursor for a negative electrode material having excellent electrochemical properties was able to be obtained even when the pressure molding was performed at room temperature.

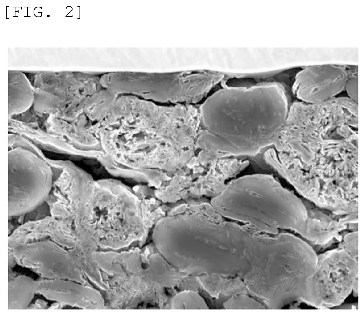

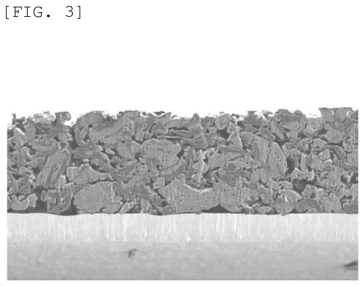

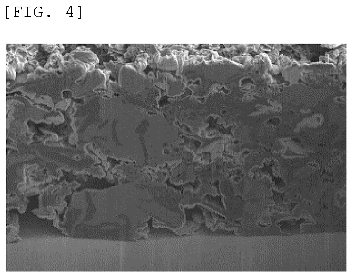

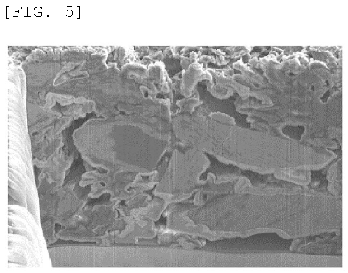

FIGS. 2 to 5 are SEM images of the cross sections of the negative electrode in which the negative electrode materials of Comparative Example 1, Inventive Example 1, Comparative Example 2, and Comparative Example 3 were coated, respectively, on the current collector. In FIGS. 2 to 5, it was confirmed that Inventive Example 1 had a form in which more pores were removed than in Comparative Example 1. In addition, in FIGS. 4 and 5, it was confirmed in Comparative Examples 2 and 3 that the density of the molded body was increased, but the pulverized form was not uniform, and there was a sharp portion after the pulverization. As a result, it was supposed that a large amount of fine powder was produced during the pulverization in Comparative Examples 2 and 3.

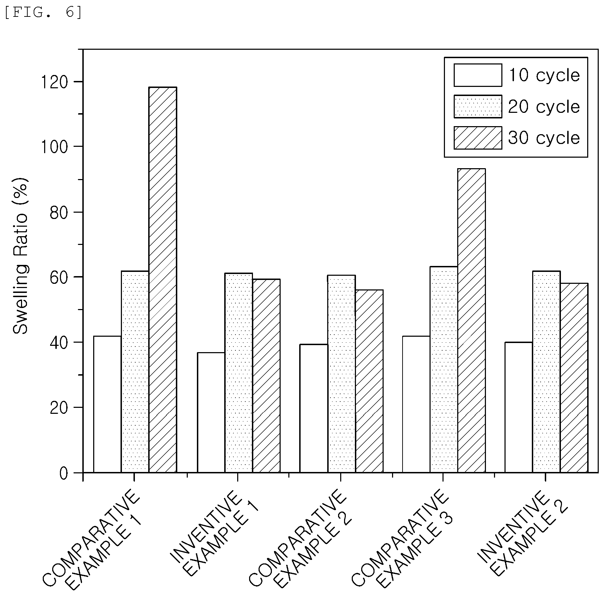

FIG. 6 is a graph showing a swelling ratio by the number of cycles of Inventive Examples 1 and 2 and Comparative Examples 1 to 3. In FIG. 6, it was confirmed that in Inventive Examples 1 and 2 and Comparative Example 2 having the molding density of more than 1.3 g/cc, a high-density carbon layer controlled the swelling of the silicon nanoparticles, thereby showing a low swelling ratio. However, in Comparative Example 1 having the molding density of less than 1.3 g/cc, a high-density carbon layer was not formed, so that the swelling of silicon nanoparticles was not suppressed to show a high swelling ratio, and in Comparative Example 3 having an excessively high molding density, since the hardness of the molded body was increased to increase a fine powder content during the pulverization, the silicon nanoparticles existed independently, thereby showing a high swelling ratio.

## Claims

1. A precursor for a negative electrode material of a lithium secondary battery comprising:
silicon nanoparticles;
a conductive material; and
a carbon-based material,
wherein the precursor has a molding density of more than 1.3 g/cc and 1.6 g/cc or less.

2. The precursor for a negative electrode material of a lithium secondary battery of claim 1, wherein the conductive material is any one or more of natural graphite and artificial graphite.

3. The precursor for a negative electrode material of a lithium secondary battery of claim 1, wherein the carbon-based material is at least one of coal-based pitch, petroleum-based pitch, coal tar, PAA, and PVA.

4. The precursor for a negative electrode material of a lithium secondary battery of claim 3, wherein the coal-based pitch and the petroleum-based pitch have a fixed carbon content of 60% or more and a β-resin value of 10% or more.

5. The precursor for a negative electrode material of a lithium secondary battery of claim 1, wherein the carbon-based material further includes a caking additive.

6. The precursor for a negative electrode material of a lithium secondary battery of claim 5, wherein the caking additive is an olefin-based oligomer or polymer having viscoelasticity, or organic material having a binder function.

7. A method for manufacturing a precursor for a negative electrode material of a lithium secondary battery, the method comprising:
preparing silicon nanoparticles, a conductive material, and a carbon-based material;
mixing the silicon nanoparticles, the conductive material, and the carbon-based material to prepare a mixture; and
pressure molding the mixture,
wherein the pressure molding is performed by applying a pressure of 6 ton/cm² or more and 20 ton/cm² or less.

8. The method for manufacturing a precursor for a negative electrode material of a lithium secondary battery of claim 7, wherein the conductive material is any one or more of natural graphite and artificial graphite.

9. The method for manufacturing a precursor for a negative electrode material of a lithium secondary battery of claim 7, wherein the carbon-based material is at least one of coal-based pitch, petroleum-based pitch, coal tar, PAA, and PVA.

10. The method for manufacturing a precursor for a negative electrode material of a lithium secondary battery of claim 9, wherein the coal-based pitch and the petroleum-based pitch have a fixed carbon content of 60% or more and a β-resin value of 10% or more.

11. The method for manufacturing a precursor for a negative electrode material of a lithium secondary battery of claim 7, wherein in the preparing of a mixture, a caking additive is further mixed.

12. The method for manufacturing a precursor for a negative electrode material of a lithium secondary battery of claim 11, wherein the caking additive is an olefin-based oligomer or polymer having viscoelasticity, or organic material having a binder function.

13. The method for manufacturing a precursor for a negative electrode material of a lithium secondary battery of claim 9, wherein when the carbon-based material is the coal-based pitch or the petroleum-based pitch, the pressure molding is performed at a temperature higher than a softening point of the pitch by 10°C to 150°C.

14. The method for manufacturing a precursor for a negative electrode material of a lithium secondary battery of claim 10 or 11, wherein the pressure molding is performed at room temperature.

15. The method for manufacturing a precursor for a negative electrode material of a lithium secondary battery of claim 8, wherein the manufactured precursor for a negative electrode material of a lithium secondary battery has a molding density of more than 1.3 g/cc and 1.6 g/cc or less.
